# EUROPEAN PATENT APPLICATION

(11) **EP 2 815 834 A1**
(43) Date of publication of application: **24.12.2014**
(21) Application number: 13173234.9
(22) Date of filing: 21.06.2013
(51) Int. Cl.: B23D 59/00, B23D 57/00, B28D 1/10

(54) **Wire monitoring system for a wire saw and method for monitoring a wire saw**

(71) Applicant: Applied Materials Switzerland Sàrl, 1033 Cheseaux-sur-Lausanne (CH)
(72) Inventor: Zominy, Claude, 74350 Copponex (FR); Schmid, Andreas, 3280 Meyriez (CH)
(74) Representative: Zimmermann & Partner

(57) **Abstract**

A wire monitoring system (10) for a wire saw (100), a wire saw (100) and a method for monitoring a wire (31) of a wire saw (100) is described. The wire monitoring system (10) for a wire saw (100) includes a sensor device (50), a first wire positioning system (21) for moving a first wire (31) from a first position of the first wire (31) to a second position of the first wire (31), a first wire holding arrangement (41) configured for holding the first wire (31) at the second position for measuring a physical characteristic of the first wire (31) with the sensor device (50).

## Description

### TECHNICAL FIELD

Embodiments of the present disclosure relate to a wire monitoring system for a wire saw, a wire saw and a method for monitoring a wire of a wire saw. Existing wire saws may be retrofitted with the wire monitoring system according to the present disclosure. More particularly, the disclosure relates to a wire monitoring system for measuring physical characteristics of a wire. The present disclosure particularly relates to multi-wire saws. Wire saws of the present disclosure are particularly adapted for cutting or sawing hard materials such as blocks of silicon or quartz.

### BACKGROUND

Wire saws are used for cutting blocks or bricks, thin slices, e.g., semiconductor wafers, from a piece of hard material such as silicon. In such devices, a wire is fed from a spool and is both guided and tensioned by wire guide cylinders. The wire that is used for sawing can be provided with an abrasive material. As one option, the abrasive material can be provided as slurry. This may be done shortly before the wire touches the material to be cut. Thereby, the abrasive is carried to the cutting position by the wire for cutting the material. As another option, the abrasive can be provided on the wire with a coating, e.g. as with diamond wire. For example, diamond particles can be provided on a metal wire with a coating, wherein the diamond particles are imbedded in the coating of the wire. Thereby, the abrasive is firmly connected with the wire.

The wire is guided and/or tensioned by wire guides. These wire guides are generally covered with a layer of synthetic resin and are scored with grooves having precise geometry and size. The wire is wound around the wire guides and forms a web or wire web. During the sawing process, the wire is moved with considerable speed. Usually, the piece to be sawed, e.g. an ingot connected to a support beam or a support holding is urged towards the web. During sawing, the piece to be sawed is moved through the wire web, wherein the speed of this movement determines the cutting speed and/or the effective cutting area that can be sawed within a given amount of time.

Generally, there is a tendency to use thinner wires in order to reduce the thickness of the cut and, thereby, to decrease the material wasted. There is also a desire to use diamond wires. These thinner wires and diamond wires are generally more susceptible to damage and under high strain the wires may break more easily. Further, there is a desire to increase the cutting speed for improving the throughput of wire saws. The maximum speed for moving the piece through the web and also the maximum effective cutting area within a given amount of time is limited by several factors including wire speed, feeding speed of the material to be sawed, hardness of the material to be sawed, disturbing influences, desired precision, and the like. When the speed is increased, the strain on the wire is generally increased as well. The above-mentioned issues of avoiding damage, undue wear, failure or breakage of the wire are even more critical at higher sawing speeds.

It is important to operate the wire saw in a manner so as to avoid or reduce varying sawing quality, varying sawing width, oscillations of the wire, or even breakage of the wire. In the worst case, if the wire breaks, unwanted consequences may arise. The loose ends of the wire may move around in the machine in an uncontrollable manner, which might harm the wire guide system or other parts of the machine. Further, if the wire breaks and moves on, it will be torn out of the object to be sawed.

### SUMMARY

In view of the above, the present disclosure provides a wire saw that overcomes at least some of the problems in the art. This object is achieved at least to some extent by a wire monitoring system for a wire saw, a wire saw and a method for monitoring physical characteristics of at least one wire according to the independent claims. Further aspects, advantages, and features of the present disclosure are apparent from the dependent claims, the description, and the accompanying drawings.

In view of the above, a wire monitoring system for a wire saw is provided. The wire monitoring system includes a sensor device; a first wire positioning system for moving a first wire from a first position of the first wire to a second position of the first wire; a first wire holding arrangement configured for holding the first wire at the second position for measuring a physical characteristic of the first wire with the sensor device.

According to one aspect of the present disclosure, an existing wire saw may be retrofitted with the wire monitoring system as described herein. A method for retrofitting a wire saw is disclosed including providing a wire saw with the wire monitoring system as described herein.

According to another aspect of the present disclosure a wire saw including at least two wire guide cylinders and a wire monitoring system as described herein is provided.

According to a further aspect of the present disclosure a method for monitoring physical characteristics of at least one wire is provided, wherein the method includes: moving at least one wire from a first position to a second position; holding the second position of the at least one wire; and measuring a physical characteristic of the at least one wire at the second position.

The present disclosure is also directed to an apparatus for carrying out the disclosed methods and including apparatus parts for performing each described method steps. These method steps may be performed by way of hardware components, a computer programmed by appropriate software, by any combination of the two or in any other manner. Furthermore, the disclosure is also directed to methods by which the described apparatus operates. It includes method steps for carrying out every function of the apparatus.

Further aspects, advantages, and features of the present disclosure are apparent from the dependent claims, the description, and the accompanying drawings.

### BRIEF DESCRIPTION OF THE DRAWINGS

So that the manner in which the above recited features of the present disclosure can be understood in detail, a more particular description of the disclosure, briefly summarized above, may be had by reference to embodiments. The accompanying drawings relate to embodiments of the disclosure and are described in the following: Typical embodiments are depicted in the drawings and are detailed in the description which follows. In the drawings:
- Fig. 1: shows a schematic side view of a wire saw including a wire monitoring system according to embodiments described herein;
- Fig. 2: shows a schematic side view of the wire monitoring system according to embodiments described herein, wherein a first wire is in a first position;
- Fig. 3: shows a schematic side view of the wire monitoring system according to Fig. 2, wherein the first wire is in a second position;
- Fig. 4: shows a schematic side view of a wire monitoring system according to embodiments described herein; wherein the first wire is in a first position and a second wire is in a first position
- Fig. 5: shows a schematic side view of the wire monitoring system according to Fig. 4, wherein the first wire is in a second position and the second wire is in a second position;
- Fig. 6: shows a schematic side view of the wire monitoring system according to embodiments described herein, wherein the first wire in the second position of the first wire is held by a first holding arrangement and the second wire in the second position of the second wire is held by a second holding arrangement;
- Fig. 7: shows an illustrative embodiment of a method for monitoring a physical characteristic of at least one wire according to embodiments described herein.

### DETAILED DESCRIPTION OF EMBODIMENTS

Reference will now be made in detail to the various embodiments, one or more examples of which are illustrated in each figure. Each example is provided by way of explanation and is not meant as a limitation. For example, features illustrated or described as part of one embodiment can be used on or in conjunction with any other embodiment to yield yet a further embodiment. It is intended that the present disclosure includes such modifications and variations.

Within the following description of the drawings, the same reference numbers refer to the same or to similar components. Generally, only the differences with respect to the individual embodiments are described. Unless specified otherwise, the description of a part or aspect in one embodiment applies to a corresponding part or aspect in another embodiment as well.

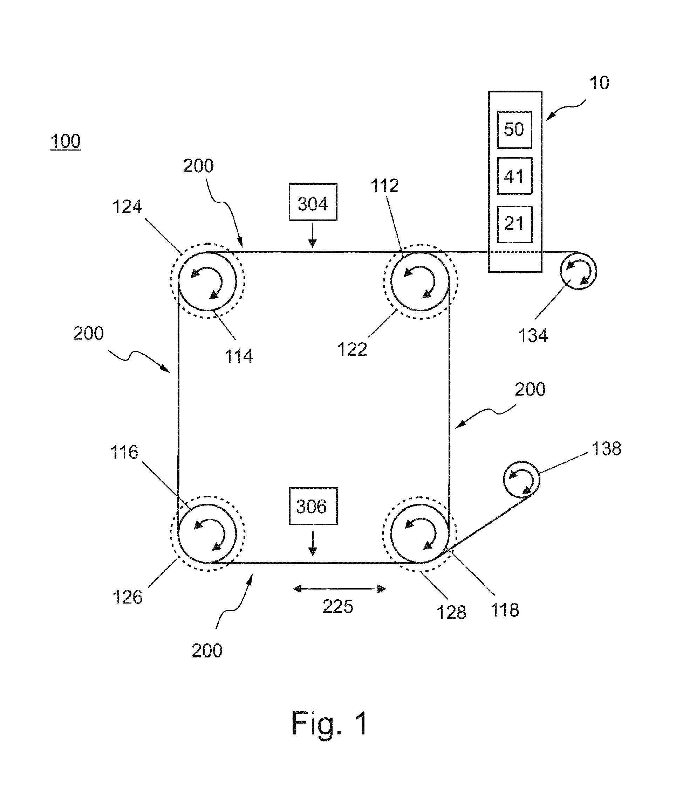

As schematically shown in Fig.1, a monitoring system 10 for a wire saw 100 according to embodiments described herein includes a sensor device 50, a first wire positioning system 21, and a first wire holding arrangement 41. According to embodiments, the first wire positioning system 21 may be employed for moving a first wire 31 from a first position of the first wire to a second position of the first wire. According to embodiments, the first wire holding arrangement 41 may be configured for holding the first wire 31 at the second position. At the second position of the first wire 31, a physical characteristic of the first wire 31 may be measured by the sensor device 50.

According to embodiments, a monitoring system 10 may be positioned in a region of the wire saw in which a single wire is spanned between two rolls, spools or cylinders. For example, as exemplarily shown in Fig. 1, the monitoring system 10 may be positioned between a supply spool 134 from which a single wire is supplied to a guide cylinder 112. Although not explicitly shown, alternatively the monitoring system 10 may also be positioned between a guide cylinder 118 from which a single wire is received by a take-up spool 138. Alternatively, the monitoring system 10 may be positioned at the vertical wire webs, for example at the wire web between the guide cylinders 114 and 116 or at the wire web between the guide cylinders 112 and 118 shown in Fig.1. According to embodiments, two or more monitoring systems may be provided, e.g. a first monitoring system between the supply spool 134, from which a single wire is supplied to a guide cylinder 112, and a second monitoring system between a further guide cylinder 118 from which a single wire is received by a take-up spool 138.

According to embodiments, a wire saw 100 including at least two wire guide cylinders and a wire monitoring system as described herein is provided. According to embodiments, as exemplarily shown in Fig. 1, the wire saw 100 may include e.g. four wire guide cylinders 112, 114, 116, 118 for transporting and guiding the wire. The guide cylinders 112, 114, 116, 118 may be grooved with a constant or progressive pitch for forming a layer of parallel wires. In the present disclosure, a layer of wires between two guide cylinders is also referred to as a wire web 200. The pitch between adjacent wires of the wire web may be defined by engraved grooves on the periphery of the wire guide cylinders 112, 114, 116, 118 which determines the thickness of sawed slices.

A wire saw as understood herein may be a cropper, a squarer, or a wafer cutting wire saw. According to embodiments, the wire saw is a multi-wire saw. A multi-wire saw allows high productivity and high quality slicing of silicon wafers for the semiconductor and photovoltaic industries. A multi-wire saw can include a high-strength steel wire that may be moved unidirectionally (i.e., only in the forward direction) or bi-directionally (i.e., backwards and forwards) to perform the cutting action. The wire may be provided with diamonds on the surface of the wire.

According to embodiments described herein, the wire saw is used for cutting hard material such as semiconductor material, for example, silicon, quartz, or the like at high speed. The wire speed, that is the speed of the wire moving through the wire saw can be, for example, 10 m/s or even higher. The wire speed can be in a range of 10 to 15 m/s. However, higher wire speeds, such as of 20 m/s, 25 m/s or 30 m/s can also be desirable. According to embodiments, the movement of the wire may only be unidirectional, i.e., always in the forward direction. According to other embodiments, the movement may include a movement in the backward direction, in particular, the movement can be a back-and-forth movement of the wire in which the movement direction of the wire is amended repeatedly.

According to embodiments, which can be combined with other embodiments described herein, the wires may have different diameters depending on the type of device. In an embodiment pertaining to a squarer, the wire diameter may be from about 250 µm to about 450 µm, e.g., 300 µm to 350 µm. In an embodiment pertaining to a wafer cutting wire saw, the wire diameter may be from 80 µm to 180 µm, more particularly from 120 µm to 140 µm.

In the present disclosure, the term "wire diameter" is to be understood as the apparent external diameter of the wire. For example, in case a wire is used in which an abrasive is provided on the wire as a coating, e.g. as with diamond wire, the "wire diameter" is to be understood as the diameter of the wire core plus the thickness of the coating over the diameter. For example, diamond particles can be provided on a metal wire with a coating, wherein the diamond particles are imbedded in the coating of the wire. Hence, the "wire diameter" of a diamond wire may vary locally around the circumference depending on the density and shape of diamond grits imbedded in the coating.

According to embodiments, the wire employed for cutting may be diamond wire. By using diamond wire, the throughput may be increased by a factor of 2 or even more in comparison to conventional steel wire.

According to embodiments, the wire may include high strength steel so as to saw ingots of hard material, or more particularly compositions, such as silicon, ceramic, compounds of the elements of groups III-V and II-VI, GGG (gadolinium gallium garnet), sapphire, etc., in slices of desirably about 300 µm or less, or for example for next generation substrates 180 µm, 80 µm or less in thickness. An abrasive agent can be used, which can be a commercial product, such as diamond, silicon carbide, alumina, or other useful material that is used to improve the ingot sawing process. The abrasive agent may be fixed to the wires, or be in a free form that is in suspension in a liquid (e.g., PEG), such as a slurry, which serves as a transport for the abrasive particles.

According to embodiments, with exemplary reference to Fig. 1, a wire supply spool 134 may be provided with a wire reservoir. The wire supply spool 134, if still complete, can hold several hundred kilometers of wire. According to embodiments, the wire can be fed to the guide cylinders 112, 114, 116, 118 from the wire feed spool 134 and wound about the guide cylinders 112, 114, 116, 118 to form a layer of parallel wires between the wire guide cylinders. The wire can then be returned to a suitable receiving device, such as a take-up spool 138.

According to embodiments, at least one of the wire guide cylinders 112, 114, 116, 118 may be connected to a motor or drive 122, 124, 126, 128 (shown in dashed lines in Fig. 1). Each drive may be adapted for performing a back-and-forth movement of the wire. The back-and-forth movement of the wire is denoted with reference number 225 in Fig. 1. The wire guides may be rotated by drives that cause each wire in the wire-web to move at a relatively high speed of, for instance, 5 to 20 m/s. The motors driving the wire can be motors having a small momentum in order to stop and accelerate within a short time period. This is particularly useful in the embodiments of the present disclosure providing a back-and-forth movement. For instance, the direction of wire movement may change at least every 10 sec, at least every 30 sec, or at least every 1 min.

According to embodiments, the wire guide cylinders 112, 114, 116, 118 may be supported by one or more bearings, which can be coupled to a wire tensioning system (not shown) that may be adapted to provide a desired tension. According to embodiments, a wire saw control system may provide control of the wire tension.

During cutting action, one or more ingots 304, 306 may be pushed through the wire web in order to slice it. This is exemplarily indicated in Fig. 1 by the arrows below the ingots 304 and 306 pointing towards the wire web 200. According to embodiments, one or more ingots may be supported by a table (not shown) which can be moved with a particular speed. In the present disclosure, the speed with which the material to be sawed, e.g. an ingot, is moved relatively to the moving wire is also referred to as material feed rate. The material feed rate in the embodiments described herein may be in the range of 650 µm/min to 800 µm/min, particularly about 750 µm/min to 900 µm/min, more particularly about 850 to 1050 µm/min. Alternatively, the material feed rate in the embodiments described herein may be above 1000 µm/min.

Alternatively, the ingots 304, 306 may be stationary while the wire web is pushed through it. According to embodiments, the one or more ingots may be sliced into a multitude of wafers, such as at least 500 or even more. According to embodiments, the lengths of the ingots may be in the range of up to 250 mm, in particular in the case of multi-crystalline Silicon, and up to 500 mm, in particular in case of mono-crystalline Silicon.

According to the embodiments, as exemplarily shown in Fig. 1, four wire webs 200 may be provided. Sawing takes place using at least one wire web, for example two wire webs at the same time (as illustrated in Fig. 1). The number of parallel wires can correspond to the number of slicing processes. For instance, the wire may be wound up in such a way that the resulting wire web includes 100 wire portions arranged in parallel. A wafer pushed through this web of 100 wires is sliced into 101 pieces. According to the embodiments, with exemplary reference to Fig.1, it is possible that sawing is undertaken at the same time at an upper working area and a lower working area. In the present disclosure the term "working area" is to be understood as the area spanned by the wires of a wire saw, for example a web of wires also referred to as a layer of wires. According to embodiments, the working area is the area in which a single piece to be sawed, for example an ingot, interacts with the wires of a wire saw during cutting.

According to embodiments, as exemplarily shown in Fig.1, the wire saw may include two vertically arranged webs. According to embodiments, the vertically arranged webs may be used for transporting the wire between the horizontally oriented working areas. During transport between the working areas the wire can cool down. According to other embodiments, the working areas may be oriented vertically.

After traveling through the wire saw, the wire may exit the operation area of the wire saw at a diameter reduced in comparison to the initial diameter of the wire before the sawing process. The wear of the wire is process dependent. In particular, the higher the cut rate, the higher the resulting temperature, the higher the wire wear. Consequently, as the diameter of the cutting wire and thus the mechanical properties of the wire may change during the cutting process, as a function of time and temperature, the cutting force acting on the ingot by the wire and therefore the abrasion property of the wire changes during the cutting process resulting in undesirable inhomogeneous cutting surfaces of the ingot. Since on the one hand the wire wear increases the wire breakage probability and, on the other hand, the wire usage increases the costs of manufacturing a wafer. By providing a wire monitoring system 10 for a wire saw 100, physical characteristics of the wire can be monitored and the cutting process can be optimized using the measurement data of the physical characteristics. Thereby, the overall process costs can be minimized.

Conventionally, for measuring wire characteristics, such as wear during the sawing process, sensors are employed which are moved towards the wire for measuring e.g. a wire diameter. However, determination of wire characteristics such as wear of a wire, particularly for thin wires having diameters of less than 500 µm, requires highly precise measurement and thus exact positioning of the sensor. Conventionally, the position to which the sensor approaches for measuring e.g. a wire diameter is a fixed pre-selected position. It turns out that positioning the sensor at a fixed pre-selected position bears the problem that when the diameter of the wire or the position of the wire in relation to the sensor changes during the cutting process the measurements becomes inaccurate. A change of position of the wire in relation to the sensor can, for example, resolve from wear of wire guide cylinders on which wires run during wafer cutting. Further, vibration of the wire may also result in an inaccurate measurement. Consequently, a critical wire diameter below which a breakage of the wire is likely to occur may not be detected or detected although the diameter is still thick enough for continuing with the cutting process. In the first case, as outlined above, serious damage to the wire saw and wafers may occur. In the second case the wire is not used to its full capacity. Hence, conventional systems for monitoring wire characteristics have economical disadvantages.

According to embodiments, physical characteristics of the wire may be measured during the cutting process. The measuring of physical characteristics of the wire can be carried out at selectable time intervals. In particular, for conducting a measurement of at least one physical characteristic of the wire the cutting process may be stopped, such as after a selectable time interval. Physical characteristics of the wire may be measured acquiring measurement data using the wire monitoring system 10 as described herein.

The acquired measurement data can then be used for adjusting cutting process parameters. For example, when the wire has experienced a certain degree of wear resulting in a decrease of the diameter, measurement data of the wire diameter can be employed for calculation of mechanical properties of the used wire having a reduced diameter compared to a new wire. Thus, cutting process parameters can be adjusted according to the changing mechanical properties of the wire due to wear. A critical wire diameter below which breakage of the wire is likely to occur may be detected such that the used wire can be replaced by a new wire before damage occurs due to a breakage of the wire.

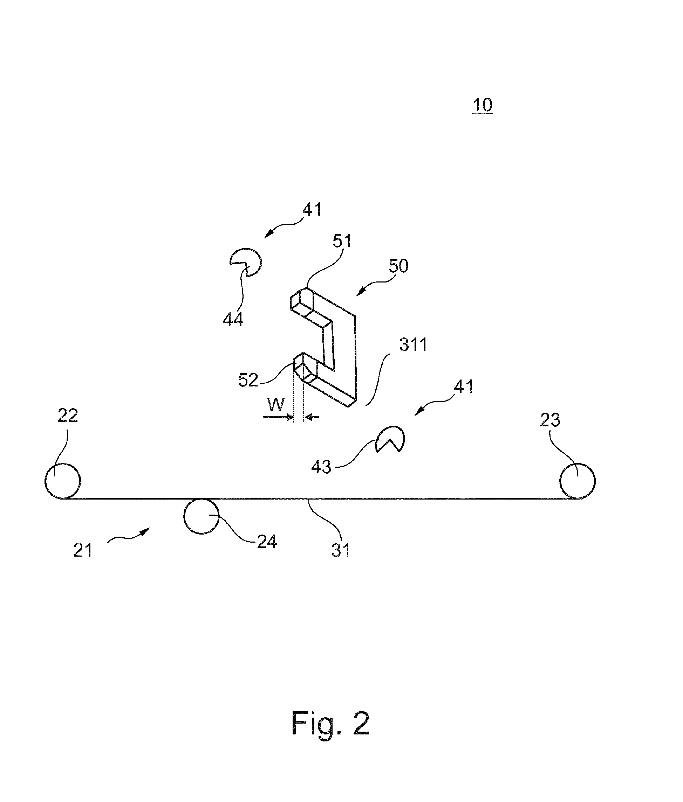

Embodiments described herein, with exemplary reference to Fig.1, provide a wire saw 100 including a wire monitoring system 10 which is capable of measuring a physical characteristic of the wire during the cutting process. In particular, as exemplarily shown in Fig. 2, according to embodiments the wire monitoring system 10 described herein includes a sensor device 50; a first wire positioning system 21 for moving a first wire from a first position of the first wire 31 to a second position of the first wire; a first wire holding arrangement 41 configured for holding the first wire at the second position for measuring a physical characteristic of the first wire with the sensor device 50.

According to embodiments, a wire positioning system as described herein may be understood as a system capable of transferring at least a portion of a wire of a wire saw from a first position to a second position. In the present disclosure, the expression "wire trajectory" may be understood as the contour the wire describes in space. According to embodiments, the first position of the wire may be a position on a first wire trajectory and the second position may be a position on a second wire trajectory. According to embodiments, the first wire trajectory may be a trajectory of a moving wire or a non-moving wire. According to embodiments, the second wire trajectory may be a trajectory of a moving wire or a non-moving wire. In the present disclosure, a wire trajectory is to be understood as a curve along which the wire is oriented.

According to embodiments, a wire positioning system as described herein is capable of transferring at least a portion of a wire from a first position to a second position by performing a movement, in particular, along a trajectory which is not parallel to the first wire trajectory. For example, the movement of the wire positioning system for transferring at least a portion of a wire from a first position to a second position can be substantially perpendicular to the first wire trajectory.

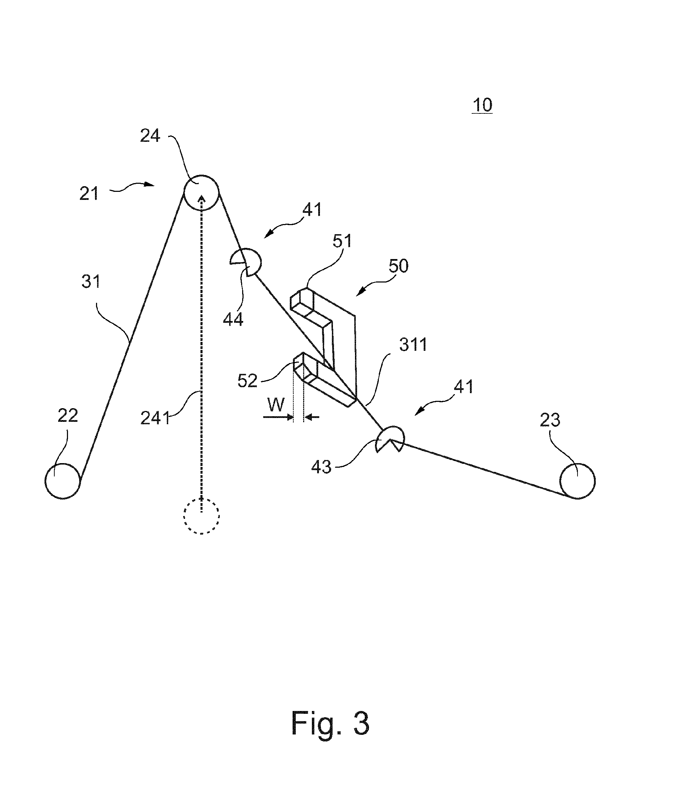

According to embodiments, with exemplary reference to Fig. 2, the first wire positioning system 21 of the wire monitoring system may include two first wire guide pulleys 22, 23, for guiding the first wire 31 between the two first wire guide pulleys in the first position of the first wire 31. At least one first movable positioning pulley 24 may be arranged between the two first wire guide pulleys 22, 23. The at least one first movable positioning pulley 24 may be adapted for carrying the first wire 31 from a first position of the first wire 31 to a second position of the first wire 31, as exemplarily shown in Fig. 3. The at least one first movable positioning pulley 24 can be coupled to an actuator for performing a movement, in particular along a trajectory, in particular a linear trajectory.

According to embodiments, as exemplarily indicated in Fig. 3 by the arrow 241, the at least one first movable positioning pulley 24 may be moved between a first position of the first movable positioning pulley 24 and a second position of the first movable positioning pulley 24. As shown in Fig. 3, when the at least one first movable positioning pulley 24 is moved from the first position of the first movable positioning pulley 24 to the second position of the first movable positioning pulley 24, the first wire may be carried from the first position of the first wire to the second position of the first wire. According to embodiments, the first position of the wire may be a position on a first wire trajectory, as exemplarily illustrated in Fig. 2, and the second position may be a position on a second wire trajectory, as exemplarily illustrated in Fig. 3.

According to embodiments, as exemplary shown in Fig. 2 and 3, the two first wire guide pulleys 22, 23 may be arranged on the opposite side of the first wire 31 compared to the first movable positioning pulley 24. For example, the two first wire guide pulleys may be arranged on one side of the first wire and the first movable positioning pulley may be arranged on the opposite side of the first wire. The two first wire guide pulleys may be fixed in a selectable position.

According to embodiments, when the first movable positioning pulley is in the first position of the first movable positioning pulley, the first wire can be in the first position of the first wire forming a line between the two first wire guide pulleys. When the first movable positioning pulley is in the second position of first movable positioning pulley at least a portion of the first wire is transferred from a first position of the first wire to a second position of the first wire. As exemplarily shown in Fig. 3, when the first movable positioning pulley moves towards the second position of first movable positioning pulley at least two portions of the first wire having different inclined wire orientation may be formed. In particular, the at least two inclined portions of the first wire formed by moving the first movable positioning pulley to the second position of first movable positioning pulley may form sides of a triangle, wherein the base of the triangle can be considered as an imaginary line between the two first wire guide pulleys and the tip of the triangle is the imaginary location at which the two inclined portions having different orientation meet.

According to embodiments, with exemplary reference to Fig. 3, the first holding arrangement 41 is configured and arranged such that when the first movable positioning pulley 24 has transferred at least a portion of the first wire 31 from a first position of the first wire to a second position of the first wire, at least one of the at least two inclined portions of the first wire in the second position of the first wire may be held by the first holding arrangement 41. In the present disclosure the expression "a wire is held by a holding arrangement" is to be understood as the wire is in contact with the holding arrangement. Further, the expression "a wire is held by a holding arrangement" may be understood as the wire is diverted by the holding arrangement. According to embodiments, in the second position of the first wire, the first wire can be received by the first holding arrangement 41 such that a first wire measurement portion 311 of the first wire 31 may be formed.

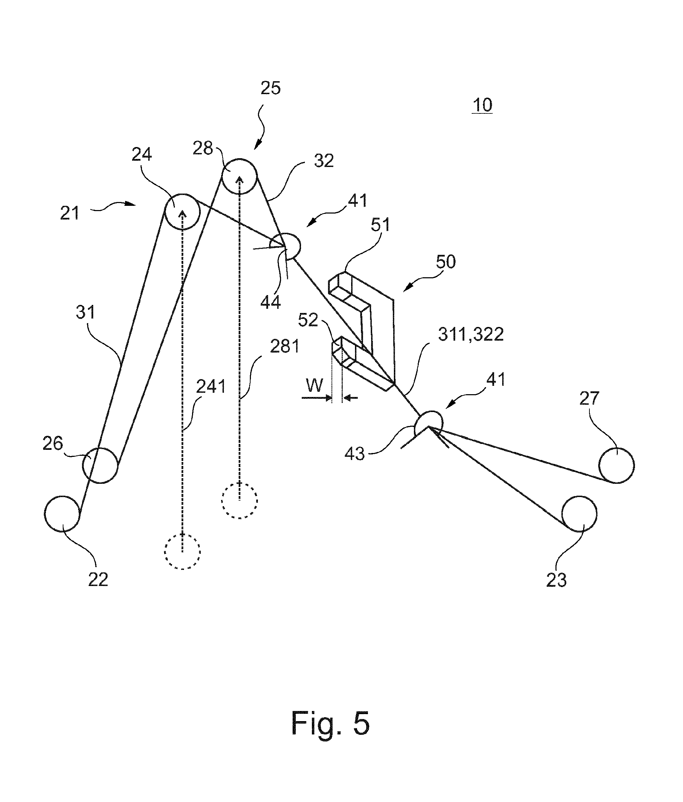

According to embodiments, as exemplary shown in Fig. 3, when the first movable positioning pulley 24 has carried the first wire to the second position of the first wire the first holding arrangement 41 may hold the second position of the first wire 31. The first wire holding arrangement 41 may include a first holding element 43 and a second holding element 44. The first holding element 43 and the second holding element 44 can be configured for receiving the first wire 31. In particular, the first holding element 43 and the second holding element 44 may, without limitation to the shown embodiment, be configured having a V-shaped recess for receiving the first wire and/or a second wire, as exemplarily shown in Fig. 5.

According to embodiments, the length of the portion of the first wire 31 between the first holding element 43 and the second holding element 44 may be referred to as the first measurement portion 311. In the present disclosure, the expression "measurement portion" is to be understood as the portion of the wire in which at least a part of the wire portion between holding elements of a holding arrangement is measured. According to embodiments, the length of the first measurement portion 311 may be limited by the width W of the sensor device 50. As the length of the measurement portion is decreased wire vibration of the measurement portion can be more effectively suppressed. According to embodiments, the measurement portion may be below 60 mm, in particular below 50 mm, more particular below 40 mm.

According to embodiments, not explicitly shown in the Figures, the first holding element 43 and second holding element 44 of the first holding arrangement 41 may be pulleys. The pulleys may be rotatably mounted on the first holding arrangement, such that a measurement of at least one physical characteristic of the wire may be conducted without the need to stop the cutting process. Accordingly, a wire monitoring system may be provided with which physical characteristics of a wire may be measured during cutting operation of the wire saw.

According to embodiments of the wire monitoring system described herein, as exemplarily shown in Figs. 2-6, the sensor device 50 may be configured and arranged such that a physical characteristic of the first wire can be measured in the second position of the first wire 31. According to embodiments, the sensor device may be configured and arranged for measuring a wire characteristic of at least a part of the wire in the measurement portion 311.

As exemplarily shown in Figs. 2-6, according to embodiments, the sensor device 50 may include a radiation source 51 and a sensor 52, for example an optical sensor. According to embodiments the radiation source 51 and the optical sensor 52 may be arranged opposite to each other. According to embodiments, the radiation source 51 and the optical sensor 52 may be arranged opposite and parallel to each other having a distance in between of below 30 cm, in particular below 20 cm, more particularly below 15 cm. Also not explicitly shown, the first measurement portion 311 may be guided through the sensor device, i.e. between the optical sensor 52 and the radiation source 51, substantially perpendicular to the optical path between the optical sensor 52 and the radiation source 51.

According to embodiments, the sensor device of the wire monitoring system may include a radiation source and an optical sensor. The optical sensor may include the capability to process visible radiation. According to embodiments, the optical sensor may be adapted for processing radiation in the extra-optical range, such as infrared, ultraviolet radiation, X-rays, alpha particle radiation, electron particle radiation, and/or gamma rays. According to embodiments, the radiation source for one or more of the listed radiation types may be part of the wire monitoring system. For instance, in the case of an optical sensor that may be adapted to process radiation in the optical range (400-800 nm), environmental light or the use of a LED might act as the respective light source. The optical sensor may be applied in the form of a photo sensor or a CCD-sensor (charged coupled devices).

According to embodiments, the optical sensor may be connected to a data processing unit (not shown) via a cable or wireless connection. The data processing unit can be adapted to inspect and analyze the signals of the optical sensor during operation of the wire saw. If the wire exhibits any physical condition that is defined as non-normal, the data processing unit may detect the change and trigger a reaction. The data processing unit may be connected to or be part of a control unit of the wire saw for controlling the sawing process.

According to embodiments, the optical sensor may be adapted to detect a change in at least one physical characteristic of the wire by analysing the acquired data taken by the sensor device, for example, having an optical sensor e.g. a camera. In case the wire exhibits a thinning, the data processing unit detects the change and may initiate a reaction when the cutting process is continued after the measuring of a physical characteristic of the wire. Such a reaction can be an increase or decrease of the wire speed, a reduction of the material feed rate, a wire tension, a change of coolant supply rate or an increase of the portion of forward movement of the wire in comparison to the portion of backward movement of the wire during cutting. If a non-acceptable thinning of the wire is detected, i.e. a critical diameter of the wire below which breakage is likely to occur is reached, the reaction initiated by the data processing unit may be providing new wire from the supply spool before the cutting process is continued.

For instance, the wire might exhibit a physical characteristic such as a wearing, wire diameter, wire homogeneity, diamond concentration and/or diamond repartition which is, according to the data acquired taken by the optical sensor, exceeding or underrunning a first threshold value. For example a wire saw control system might be programmed to increase the wire speed by a selectable value, such as by at least 10%, the tension of the wire by a selectable value (for reducing the breaking probability), such as by at least 10% and the back-movements of the wire by a selectable value, such as at least 20%. In addition or alternatively, the wire saw control system might be programmed to reduce the material feed rate by a selectable value, such as by at least 10%. Thereby, the risk of wire breakage can substantially be avoided. By exactly determining the physical characteristic of the wire it is possible to ensure that the wire is used to the full capacity of the wire to thereby increase the efficiency and cost effectiveness of the cutting process.

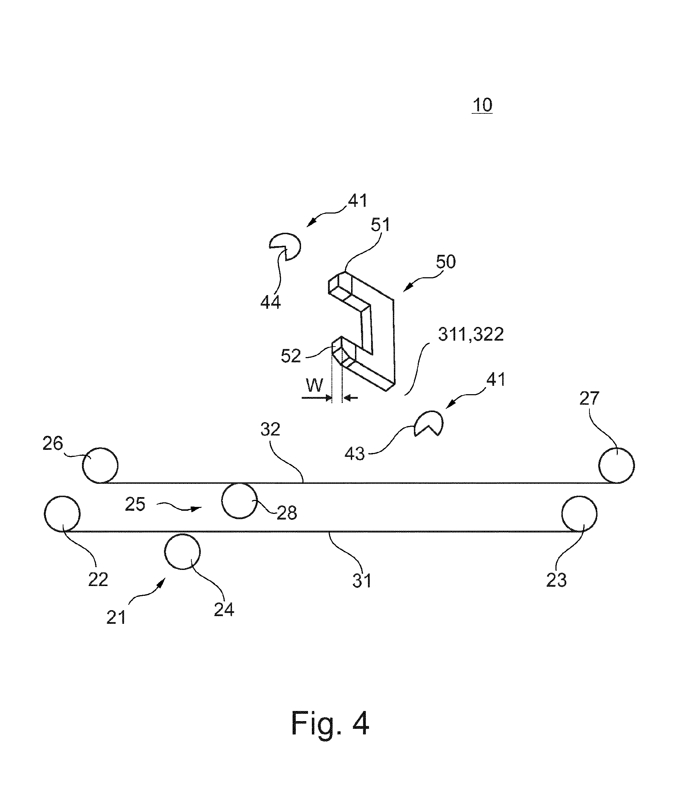

According to embodiments, with exemplary reference to Fig. 4, the wire monitoring system 10 as described herein may include a first wire positioning system 21 and a second wire positioning system 25. The second wire positioning system 25 may be configured for moving a second wire 32 from a first position of the second wire to a second position of the second wire. The first wire positioning system 21 of the exemplary embodiment illustrated in Fig. 4 may correspond to the first wire positioning system 21 explained in connection with embodiments exemplarily shown in Figs. 2 and 3.

According to embodiments, the second wire positioning system 25 may be configured similar to the first wire positioning system 21 as described above. The first position of the second wire 32 may correspond to a position of the second wire 32 in which the second wire 32 may be parallel to the first wire 31 in the first position of the first wire. Alternatively, the first position of the second wire 32 may be non-parallel to the first wire 31 in the first position of the first wire 31. According to embodiments, as exemplarily shown in Figs. 4 and 5, the second wire positioning system 25 can include two second wire guide pulleys 26, 27 for guiding the second wire between the two second wire guide pulleys 26, 27 in the first position of the second wire. According to embodiments, at least one second movable positioning pulley 28 may be arranged between the two wire guide pulleys 26, 27. The at least one second movable positioning pulley 28 may be adapted for carrying the second wire 32 from the first position of the second wire 32 to the second position of the second wire 32.

According to embodiments, the at least one second movable positioning pulley 28 can be coupled to an actuator for performing a movement, in particular along a trajectory, in particular a linear trajectory. The configuration, arrangement and functionality of the two second wire guide pulleys 26, 27 and the second movable positioning pulley 28 may be similar to that as described above with respect to the configuration, arrangement and functionality of the two first wire guide pulleys 22, 23 and the first movable positioning pulley 24. According to embodiments, as exemplarily indicated in Fig. 5 by the arrow 281, the at least one second movable positioning pulley 28 may be moved between a first position of the second movable positioning pulley 28 and a second position of the second movable positioning pulley 28. As shown in Fig. 5, when the at least one second movable positioning pulley 28 is moved from the first position of the second movable positioning pulley 28 to the second position of the second movable positioning pulley 28, the second wire 32 is carried from the first position of the second wire 32 to the second position of the second wire 32.

According to embodiments, as exemplarily shown in Fig. 5, the first wire holding arrangement 41 may be configured for holding the second wire 32 at the second position of the second wire 32 for measuring a physical characteristic of the second wire 32 when the second wire is in the second position of the second wire 32. The first wire holding arrangement 41 may hold the first wire 31 in the second position of the first wire 31 and/or the second wire 32 in the second position of the second wire 32, as exemplarily shown in Fig. 5. In the second position of the second wire, the second wire may be received by the first holding arrangement 41 such that a second wire measurement portion 322 of the second wire 32 may be formed.

According to embodiments, as exemplarily shown in Fig. 5, the first wire holding arrangement 41 of the wire monitoring system includes a first holding element 43 and a second holding element 44 for holding the first wire 31 and/or the second wire 32 at their second position for measuring a physical characteristic of the first wire and/or the second wire 32 with the sensor device 50. The first holding element and the second holding element may be configured for holding the first wire in the second position of the first wire and/or the second wire in the second position of the second wire. The first holding element and the second holding element ensure that the first wire and/or the second wire can be positioned precisely at a predetermined position such that the distance between the first wire and/or the second wire and the optical sensor may be selectable. According to embodiments, the distance between the first wire and/or the second wire and the optical sensor is half the distance from the radiation source to the optical sensor. According to embodiments, the distance between the first wire and/or the second wire and the optical sensor is below 15 cm, in particular below 10 cm, more particularly below 7.5 cm. Thereby, a reproducible and accurate measurement of a physical characteristic of the first wire and/or the second wire can be realized.

According to embodiments, with exemplary reference to Fig. 5, the first holding element 43 and the second holding element 44 may be configured for receiving the first wire 31 and/or the second wire 32. In particular, the first holding element and the second holding element may be configured having a V-shaped recess for receiving the first wire and/or the second wire. According to embodiments, the first wire and/or the second wire exert a force to the apex of the recess when the first wire and/or the second wire are in their second position. Thereby, the wire portion of the first wire and/or second wire between the first holding element and the second holding element may be tensioned.

According to embodiments, not explicitly shown in Fig. 5 and not limited to any embodiment described in detail herein, the first holding element 43 and the second holding element 44 may be pulleys which are configured for receiving the first wire 31 and/or the second wire 32. According to embodiments, the pulleys of the first holding arrangement may be rotatably mounted, such that a measurement of at least one physical characteristic of the first wire 31 and/or the second wire 32 may be conducted without the need to stop the cutting process. Accordingly, a wire monitoring system may be provided with which physical characteristics of a wire may be measured during cutting operation of the wire saw. According to embodiments, the pulleys of the first holding arrangement may be configured having a V-shaped recess around their circumference for receiving the first wire and/or the second wire. According to embodiments, the first wire and/or the second wire exert a force to the recess when the first wire and/or the second wire are in their second position. Thereby, the wire portion of the first wire and/or second wire between the pulleys of the first holding arrangement may be tensioned.

According to embodiments, as exemplary shown in Fig. 5, the physical characteristics of the first wire and/or second wire may be measured in their wire portion between the first holding element 43 and the second holding element 44, also referred to as measurement portion of the first wire 311 and measurement portion of the second wire 322, respectively. According to embodiments, the first holding element and the second holding element may be arranged such that the length of the measurement portion of the first wire and/ or second wire is minimized. Thereby, measurement inaccuracies due to wire vibration may substantially be eliminated. According to embodiments, the lower limit of the length of the measurement portion of the first wire and/ or second wire is determined by the width of the sensor device. According to embodiments, the width of the sensor device may be about 40 mm, particularly about 35 mm, more particularly below 30 mm.

As illustrated in Fig. 5, when the second movable positioning pulley 28 has carried the second wire 32 to the second position of the second wire 32 the first holding arrangement 41 holds the second position of the second wire 32. As explained above with respect to the exemplary embodiment illustrated in Fig. 3, when the first movable positioning pulley 24 has carried the first wire to the second position of the first wire the first holding arrangement 41 holds the second position of the first wire 41. The first holding arrangement 41 may be configured for holding the first wire 31 and/or the second wire 32. The length of the portion of the second wire 32 between the first holding element 43 and the second holding element 44 may be referred to as second measurement portion 322. According to embodiments, as exemplary shown in Fig. 5, the first holding arrangement 41 and the sensor device 50 may be arranged and configured as explained above with respect to the embodiment shown in Fig. 3.

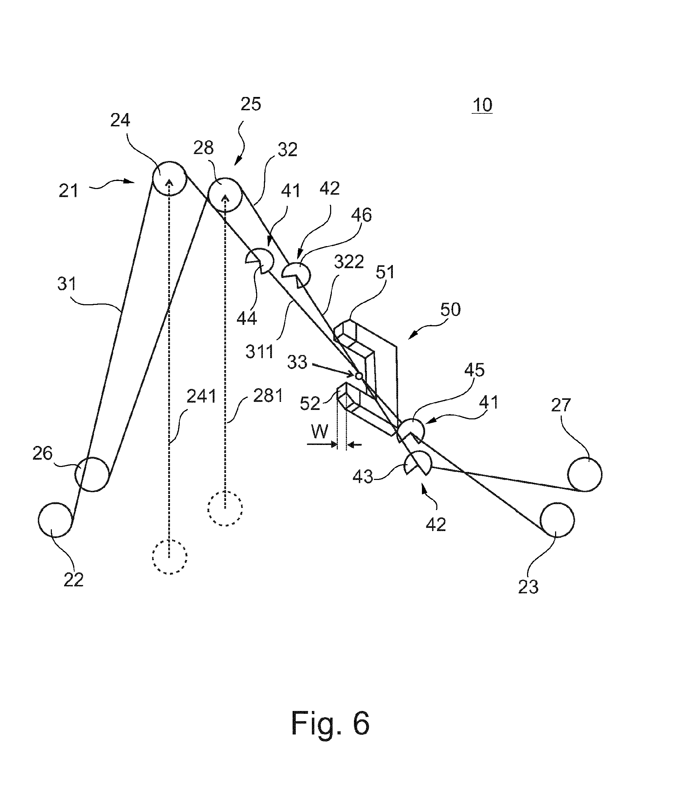

Fig. 6 shows a schematic side view of a wire monitoring system according to embodiments described herein. In particular, Fig. 6 shows an exemplary embodiment in which the wire monitoring system 10 may include a first wire positioning system 21 and a second wire positioning system 25 as well as a first wire holding arrangement 41 and a second wire holding arrangement 42. The first wire positioning system 21 of the exemplary embodiment illustrated in Fig. 6 may correspond to the first wire positioning system 21 explained in connection with the exemplary embodiment shown in Figs. 2-4. The second wire positioning system 25 of the exemplary embodiment illustrated in Fig. 6 may correspond to the second wire positioning system 25 explained in connection with the embodiment shown in Figs. 4 and 5.

According to embodiments, as exemplarily shown in Fig. 6, the wire monitoring system 10 including a second wire holding arrangement 42 includes a third holding element 45 and a forth holding element 46 for holding the second wire 32. The third holding element 45 and a forth holding element 46 may be configured correspondingly to the first holding element 43 and a second holding element 44. However, the third holding element 45 and the forth holding element 46 may be arranged in a different plane compared to the first holding element 43 and the second holding element 44. Particularly, the third holding element 45 and the forth holding element 46 may be arranged relative to the first holding element 43 and the second holding element 44, such that when the first wire 31 and the second wire 32 are in their second position, the first measurement portion 311 and the second measurement portion 322 form an intersection 33.

According to embodiments, the intersection 33 may be located in front of the sensor device 50. Particularly, the intersection 33 of the first wire 31 and the second wire 32 may be located at a measurement point between the optical sensor 52 and the radiation source 51. In the present disclosure, a "measurement point" is to be understood as the optimum position relative to the sensor for a given sensing technology and sensor model. According to embodiments, the measurement point may be located in the middle between the optical sensor 52 and the radiation source 51 or at any other position relative to the sensor, which is optimal for carrying out a measurement.

According to embodiments, not explicitly shown in the Figures, the holding elements 43, 44, 45, 46 of the holding arrangements 41, 42 may be pulleys. The pulleys may be rotatably mounted on the holding arrangements, such that a measurement of at least one physical characteristic of the wire may be conducted without the need to stop the cutting process. Accordingly, a wire monitoring system may be provided with which physical characteristics of a wire may be measured during cutting operation of the wire saw.

According to embodiments, as exemplarily shown in Fig. 6, the wire monitoring system 10 including a second wire positioning system 25 for moving a second wire 32 from a first position of the second wire to a second position of the second wire may include a second wire holding arrangement 42. According to embodiments, the second holding arrangement 42 may be configured for holding the second wire 32 at the second position of the second wire 32 for measuring a physical characteristic of the second wire when the second wire is in the second position of the second wire. The second holding arrangement 42 may be configured similar to the first holding arrangement 41 as described in more detail herein.

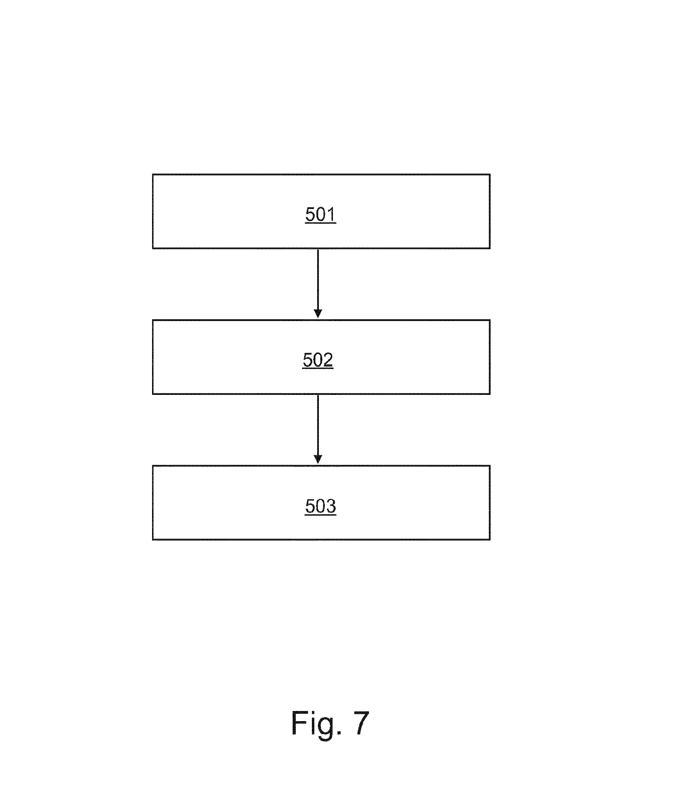

In Fig. 7 an illustrative embodiment of a method for monitoring physical characteristics of at least one wire according to embodiments described herein is illustrated. According to embodiments of the method for monitoring physical characteristics of at least one wire, the method includes: moving 501 at least one wire from a first position to a second position; holding 502 the second position of the at least one wire; and measuring 503 physical characteristics of the at least one wire at the second position.

According to embodiments of the method for monitoring physical characteristics of at least one wire, at least one physical characteristic of the wire may be measured at selectable time intervals. "Physical characteristic" in this respect pertains primarily to the question whether the wire shows large wear or inhomogeneities, or whether the wire has any type of defects, small cracks, ruptures, changes in the metallographic structure of the wire (such as grain size etc.), a high level of usage (e.g., a large thinning) or the like.

According to embodiments, the cutting process may be stopped after a selectable time interval for conducting the measurement of at least one physical characteristic of the wire. In the case that the wire's physical condition exceeds a threshold value, the mode of operation may be amended as a reaction thereof or new wire may be provided from the supply spool for continuing the cutting process.

According to embodiments of the method for monitoring physical characteristics of at least one wire moving at least one wire includes: moving a first wire by carrying the first wire from a first position of the first wire to a second position of the first wire by moving a first positioning pulley of a first wire positioning system. The at least one first movable positioning pulley can be coupled to an actuator for performing a movement, in particular along a trajectory, in particular a linear trajectory.

According to embodiments, the actuator may be operated by a source of energy in the form of an electric current, hydraulic fluid pressure or pneumatic pressure converting the energy into motion. According to some embodiments, the actuator for moving the at least one first movable positioning pulley can be an electrical motor, a linear motor, a pneumatic actuator, a hydraulic actuator or a piezoelectric actuator.

According to embodiments of the method for monitoring physical characteristics of at least one wire holding the second position of the at least one wire includes holding a first wire in the second position of the first wire. Holding the first wire in the second position may include tensioning of at least a portion of the first wire.

According to embodiments of the method for monitoring physical characteristics of at least one wire moving at least one wire may further include: moving a second wire by carrying the second wire from a first position of the second wire to a second position of the second wire by moving a second positioning pulley of a second wire positioning system. According to embodiments, holding the second position of the at least one wire may further include holding a second wire in the second position of the second wire, such that the first wire and the second wire may be positioned in front of an optical sensor.

According to embodiments of the method for monitoring physical characteristics of at least one wire holding of the first wire and holding of the second wire may be carried out such that the first wire and the second wire form a wire intersection. Measuring physical characteristics of the at least one wire may include measuring physical characteristics of the first wire and the second wire at the wire intersection.

According to embodiments described herein, the methods for monitoring physical characteristics of at least one wire can be conducted by means of computer programs, software, computer software products and the interrelated controllers, which can have a CPU, a memory, a user interface, and input and output means being in communication with the corresponding components of the wire saw. These components can be one or more of the following components: motors, wire break detection units, wire tracking devices, and the like.

While the foregoing is directed to embodiments of the invention, other and further embodiments of the invention may be devised without departing from the basic scope thereof, and the scope thereof is determined by the claims that follow.

## Claims

1. A wire monitoring system (10) for a wire saw, comprising:
a sensor device (50);
a first wire positioning system (21) for moving a first wire (31) from a first position of the first wire (31) to a second position of the first wire (31) ;
a first wire holding arrangement (41) configured for holding the first wire (31) at the second position for measuring a physical characteristic of the first wire (31) with the sensor device (50).

2. The wire monitoring system (10) for a wire saw according to claim 1, wherein the first wire positioning system (21) comprises two first wire guide pulleys (22, 23) for guiding the first wire (31) between the two wire guide pulleys (22, 23) in the first position of the first wire (31), and
at least one first movable positioning pulley (24) arranged between the two first wire guide pulleys (22, 23),
wherein the at least one first movable positioning pulley (24) is adapted to carry the first wire (31) from the first position of the first wire (31) to the second position of the first wire (31).

3. The wire monitoring system (10) for a wire saw according to claim 1 or 2, further comprising:
a second wire positioning system (25) for moving a second wire (32) from a first position of the second wire (32) to a second position of the second wire (32),
wherein the first wire holding arrangement (41) is configured for holding the second wire (32) at the second position for measuring a physical characteristic of the second wire (32) when the second wire (32) is in the second position of the second wire (32).

4. The wire monitoring system (10) for a wire saw according to claim 1 or 2, further comprising:
a second wire positioning system (25) for moving a second wire (32) from a first position of the second wire (32) to a second position of the second wire (32), and
a second wire holding arrangement (42) configured for holding the second wire (32) at the second position for measuring a physical characteristic of the second wire (32) when the second wire (32) is in the second position of the second wire (32).

5. The wire monitoring system (10) for a wire saw according to claim 4, wherein the second wire holding arrangement (42) and the first wire holding arrangement (41) are arranged such that the first wire (31) and the second wire (32) intersect when the first wire is in the second position of the first wire and the second wire is in the second position of the second wire.

6. The wire monitoring system (10) for a wire saw according to claims 3, 4 or 5, wherein the second wire positioning system (25) comprises two second wire guide pulleys (26, 27) for guiding the second wire (32) between the two second wire guide pulleys (26, 27) in the first position of the second wire, and at least one second movable positioning pulley (28) arranged between the two second wire guide pulleys (26, 27), wherein the at least one second movable positioning pulley (28) is adapted to carry the second wire (32) from the first position of the second wire (32) to the second position of the second wire (32).

7. The wire monitoring system (10) for a wire saw according to any of claims 1 to 6, wherein the sensor device (50) comprises a radiation source (51) and an optical sensor (52).

8. The wire monitoring system (10) for a wire saw according to claim 7, wherein the light source (51) is arranged opposite to the optical sensor (52).

9. The wire monitoring system (10) for a wire saw according to any of claims 1 to 8, wherein the first wire holding arrangement (41) comprises a first holding element (43) and a second holding element (44) for holding the first wire (31) at the second position for measuring a physical characteristic of the first wire (31) with the sensor device (50).

10. The wire monitoring system (10) for a wire saw according to any of claims 4 to 9, wherein the second wire holding arrangement (42) comprises a third holding element (45) and a forth holding element (46) for holding the second wire (32).

11. A wire saw (100) comprising at least two wire guide cylinders and a wire monitoring system (10) according to any of claims 1 to 10.

12. A method for monitoring physical characteristics of at least one wire, comprising:
moving (201) at least one wire from a first position to a second position;
holding (202) the second position of the at least one wire; and
measuring (203) at least one physical characteristic of the at least one wire at the second position.

13. The method for monitoring physical characteristics of at least one wire according to claim 12, wherein moving (201) at least one wire includes:
moving a first wire (31) by carrying the first wire (31) from a first position of the first wire to a second position of the first wire by moving a positioning pulley (24) of a first wire positioning system (21).

14. The method for monitoring physical characteristics of at least one wire according to claim 12 or 13, wherein holding (202) the second position of the at least one wire includes holding a first wire (31) in the second position of the first wire (31).

15. The method for monitoring physical characteristics of the wire according to claim 14,
wherein moving (201) at least one wire further includes:
moving a second wire (32) by carrying the second wire (32) from a first position of the second wire to a second position of the second wire by moving a positioning pulley (28) of a second wire positioning system (25),
wherein holding (202) the second position of the at least one wire further includes holding a second wire (32) in the second position of the second wire (32), such that the first wire (31) and the second wire (32) form a wire intersection, and
wherein measuring (203) physical characteristics of the at least one wire includes measuring physical characteristics of the first wire (31) and the second wire (32) at the wire intersection.
